# EUROPÄISCHE PATENTANMELDUNG

(11) **EP 4 575 272 A1**
(43) Veröffentlichungstag der Anmeldung: **25.06.2025**
(21) Anmeldenummer: 24214391.5
(22) Anmeldetag: 21.11.2024
(51) Int. Cl.: F16H 61/4043, F16H 61/44, F16H 61/444

(54) **ELEKTROHYDRAULISCHES ANTRIEBSSYSTEM**

(30) Priorität: 20.12.2023 DE 102023135899
(71) Anmelder: Hamm AG, 95643 Tirschenreuth (DE)
(72) Erfinder: Klein, Thomas, Mitterteich (DE); Bornemann, Detlef, Leonberg (DE)
(74) Vertreter: Ruttensperger Lachnit Trossin Gomoll

(57) **Zusammenfassung**

Ein elektrohydraulisches Antriebssystem für eine Bodenbearbeitungsmaschine mit wenigstens einer Antriebsrolle umfasst wenigstens eine durch einen Antriebselektromotor (E₁, E₂) zum Fördern von Hydraulikfluid antreibbare Fahr-Hydraulikpumpe (P₁, P₂), wenigstens zwei vermittels der wenigstens einen Fahr-Hydraulikpumpe (P₁, P₂) mit Hydraulikfluid zu speisende Fahr-Hydraulikmotoren (M₁, M₂ M₃, M₄), eine Ventilanordnung (26), wobei die Ventilanordnung (26) in Zuordnung zu jedem Fahr-Hydraulikmotor (M₁, M₂ M₃, M₄) wenigstens eine Schalt-Ventileinheit (S₁, S₂, S₃, S₄) umfasst, eine Ansteuereinheit (28) zum Betreiben der Ventilanordnung (26) derart, dass in einem Grund-Antriebszustand jeder Fahr-Hydraulikmotor (M₁, M₂ M₃, M₄) zur Erzeugung eines Antriebsdrehmoments von der wenigstens einen Fahr-Hydraulikpumpe (P₁, P₂) mit Hydraulikfluid gespeist wird und in einem Hochdruck-Antriebszustand wenigstens ein Fahr-Hydraulikmotor (M₁, M₂ M₃, M₄) nicht zur Erzeugung eines Antriebsdrehmoments von der wenigstens einen Fahr-Hydraulikpumpe (P₁, P₂) mit Hydraulikfluid gespeist wird.

## Beschreibung

Die vorliegende Erfindung betrifft ein elektrohydraulisches Antriebssystem für eine Bodenbearbeitungsmaschine, beispielsweise Bodenverdichter, mit wenigstens einer Antriebsrolle.

Als Bodenverdichter aufgebaute Bodenbearbeitungsmaschinen können beispielsweise als Antriebsrollen zwei in einer Längsrichtung des Bodenverdichters aufeinander folgend angeordnete, um zueinander parallele Drehachsen drehbare Bodenbearbeitungswalzen, insbesondere Verdichterwalzen, umfassen. Beide jeweils eine Antriebsrolle bereitstellende Bodenbearbeitungswalzen können durch ein elektrohydraulisches Antriebssystem zur Drehung um die jeweils zugeordnete Drehachse angetrieben werden. In Zuordnung zu jeder Bodenbearbeitungswalze kann das elektrohydraulische Antriebssystem einen oder zwei Fahr-Hydraulikmotoren umfassen, die jeweils paarweise oder zusammen durch eine oder mehrere Fahr-Hydraulikpumpen mit Hydraulikfluid gespeist werden, um ein Antriebsdrehmoment zu erzeugen.

Es ist die Aufgabe der vorliegenden Erfindung, ein elektrohydraulisches Antriebssystem für eine Bodenbearbeitungsmaschine, eine mit einem derartigen elektrohydraulischen Antriebssystem aufgebaute Bodenbearbeitungsmaschine sowie ein Verfahren zum Betreiben einer derartigen Bodenbearbeitungsmaschine vorzusehen, mit welchen eine hohe Effizienz in der Ausnutzung der zum Antrieb genutzten elektrischen Energie erreicht wird.

Erfindungsgemäß wird diese Aufgabe gelöst durch ein elektrohydraulisches Antriebssystem für eine Bodenbearbeitungsmaschine mit wenigstens einer Antriebsrolle, umfassend:
- wenigstens eine durch einen Antriebselektromotor zum Fördern von Hydraulikfluid antreibbare Fahr-Hydraulikpumpe,
- wenigstens zwei vermittels der wenigstens einen Fahr-Hydraulikpumpe mit Hydraulikfluid zu speisende Fahr-Hydraulikmotoren,
- eine Ventilanordnung,
- eine Ansteuereinheit zum Betreiben bzw. Ansteuern der Ventilanordnung derart, dass in einem Grund-Antriebszustand jeder Fahr-Hydraulikmotor zur Erzeugung eines Antriebsdrehmoments von der wenigstens einen Fahr-Hydraulikpumpe mit Hydraulikfluid gespeist wird und in einem Hochdruck-Antriebszustand wenigstens ein Fahr-Hydraulikmotor nicht zur Erzeugung eines Antriebsdrehmoments von der wenigstens einen Fahr-Hydraulikpumpe mit Hydraulikfluid gespeist wird.

Die vorliegende Erfindung nutzt die Erkenntnis, dass eine Erhöhung des Wirkungsgrades bei hydraulischen Antriebssystemen erreicht werden kann, wenn das Druckniveau des Hydraulikdrucks erhöht wird. Um eine Erhöhung des Druckniveaus zu erreichen, ist das erfindungsgemäß aufgebaute elektrohydraulische Antriebssystem dazu ausgebildet, einzelne der parallel mit Hydraulikfluid gespeisten Fahr-Hydraulikmotoren zu deaktivieren bzw. drucklos zu schalten. Das Druckniveau für den bzw. die zum Erzeugen eines Antriebsdrehmoment noch mit Hydraulikfluid gespeisten Fahr-Hydraulikmotoren wird entsprechend erhöht, so dass diese mit höherem Wirkungsgrad betrieben werden. Der höhere Wirkungsgrad der zum Erzeugen eines Antriebsdrehmoments noch mit Hydraulikfluid gespeisten Fahr-Hydraulikmotoren überkompensiert Strömungsverluste in den deaktivierten bzw. drucklos geschalteten Fahr-Hydraulikmotoren.

In einen derartigen Zustand, in welchem nur ein Teil der Fahr-Hydraulikmotoren zum Erzeugen eines Antriebsdrehmoments mit Hydraulikfluid gespeist wird, kann beispielsweise bei Arbeiten in einem Hauptbetriebspunkt übergegangen werden, beispielsweise dann, wenn ein Bodenverdichter zum Verdichten von Asphalt hinter einem Asphaltfertiger auf im Wesentlichen horizontalen Untergrund eingesetzt wird. In diesem Zustand kann dann beispielsweise nur eine von zwei grundsätzlich als Antriebsrolle genutzten Verdichterwalzen zur Drehung angetrieben werden, oder es kann von den beiden jeder der beiden Verdichterwalzen zugeordneten Fahr-Hydraulikmotoren jeweils nur einer zum Erzeugen eines Antriebsdrehmoments genutzt werden.

Um die verschiedenen Fahr-Hydraulikmotoren mit Hydraulikfluid zu speisen, wird vorgeschlagen, dass wenigstens ein Hydraulikkreislauf mit wenigstens zwei von wenigstens einer Fahr-Hydraulikpumpe parallel mit Hydraulikfluid gespeisten Fahr-Hydraulikmotoren vorgesehen ist, und dass die Ventilanordnung in Zuordnung zu den wenigstens zwei Fahr-Hydraulikmotoren wenigstens eines Fahr-Hydraulikkreislaufs wenigstens eine Schalt-Ventileinheit umfasst.

Um dabei die Fahr-Hydraulikmotoren für die verschiedenen Betriebsarten geeignet zu konditionieren, kann dann, wenn die einem Fahr-Hydraulikmotor zugeordnete wenigstens eine Schalt-Ventileinheit in eine Grund-Antriebszustand-Schaltstellung geschaltet ist, diesem Fahr-Hydraulikmotor von der wenigstens einen Fahr-Hydraulikpumpe gefördertes Hydraulikfluid zum Erzeugen eines Antriebsdrehmoments zugeführt werden, und dann, wenn die einem Fahr-Hydraulikmotor zugeordnete wenigstens eine Schalt-Ventileinheit in eine Hochdruck-Antriebszustand-Schaltstellung geschaltet ist, kann ein diesem Fahr-Hydraulikmotor zugeordneter, zu diesem paralleler Bypass-Strömungsweg zur Durchströmung offen sein oder/und einen Strömungskurzschluss zwischen zwei Fluidanschlüssen des Fahr-Hydraulikmotors erzeugen.

Bei einer zum Umschalten der Fahrt-Hydraulikmotoren zwischen einem aktiven und einem inaktiven Zustand besonders vorteilhaften Ausgestaltung können wenigstens zwei Fahr-Hydraulikkreisläufe vorgesehen sein, wobei jedem Fahr-Hydraulikkreislauf eine Fahr-Hydraulikpumpe und wenigstens zwei von der Fahr-Hydraulikpumpe parallel mit Hydraulikfluid gespeiste Fahr-Hydraulikmotoren zugeordnet sind.

Dabei kann jeder Fahr-Hydraulikpumpe ein Elektroantriebsmotor zugeordnet sein, so dass jede Fahr Hydraulikpumpe durch den ihr individuell zugeordneten Elektroantriebsmotor unabhängig von anderen Fahr-Hydraulikpumpen betrieben werden kann.

Für eine einfache Ausgestaltung der Ventilanordnung kann diese in jedem der Fahr-Hydraulikkreisläufe in Zuordnung zu jedem Fahrt-Hydraulikmotor eine den zu diesem parallelen Bypass-Strömungsweg in der Grund-Antriebszustand-Schaltstellung absperrende und in der Hochdruck-Antriebszustand-Schaltstellung zur Durchströmung freigebende Schalt-Ventileinheit umfassen.

Bei einem alternativen Aufbau kann bei dem elektrohydraulischen Antriebssystem wenigstens ein Fahr-Hydraulikkreislauf vorgesehen sein, wobei dem wenigstens einen Fahr-Hydraulikkreislauf eine Fahr-Hydraulikpumpe und wenigstens zwei, vorzugsweise wenigstens vier, von der Fahr-Hydraulikpumpe parallel mit Hydraulikfluid gespeiste Fahr Hydraulikmotoren zugeordnet sind.

Bei Aufbau des elektrohydraulischen Antriebssystem mit einem bzw. einem einzigen Fahr-Hydraulikkreislauf kann die Ventilanordnung in Zuordnung zu jedem Fahr-Hydraulikmotor eine den zu diesem parallelen Bypass-Strömungsweg in der Grund-Antriebszustand-Schaltstellung absperrende und in der Hochdruck-Antriebszustand-Schaltstellung zur Durchströmung freigebende Schalt-Ventileinheit umfassen.

Um dabei eine höhere Variabilität beim Aktivieren bzw. Deaktivieren der Fahr-Hydraulikmotoren zu erreichen, wird vorgeschlagen, dass die Fahr-Hydraulikmotoren wenigstens zwei von der Fahr-Hydraulikpumpe parallel gespeiste Fahr-Hydraulikmotor-Gruppen mit jeweils wenigstens zwei von der Fahr-Hydraulikpumpe parallel gespeisten Fahr-Hydraulikmotoren bilden, wobei die Ventilanordnung in Zuordnung zu jeder Fahr-Hydraulikmotor-Gruppe wenigstens eine Sperr-Ventileinheit zum wahlweisen Sperren dieser Fahr-Hydraulikmotor-Gruppe gegen die Zufuhr von durch die Fahr-Hydraulikpumpe gefördertem Hydraulikfluid und Freigeben dieser Fahr-Hydraulikmotor-Gruppe zur Zufuhr von durch die Fahr-Hydraulikpumpe gefördertem Hydraulikfluid umfasst.

Dabei kann zum definierten Abkoppeln bzw. Zukoppeln einzelner Fahr-Hydraulikmotor-Gruppen die Ventilanordnung in Zuordnung zu jeder Fahr-Hydraulikmotor-Gruppe zwei in Fluidströmungsrichtung beidseits dieser Fahr-Hydraulikmotor-Gruppe angeordnete Sperr-Ventileinheiten umfassen.

Bei einer weiteren alternativen Ausgestaltung kann die Ventilanordnung in Zuordnung zu jedem Fahr-Hydraulikmotor zwei Schalt-Ventileinheiten umfassen, wobei in der Grund-Antriebszustand-Schaltstellung die einem jeweiligen Fahr-Hydraulikmotor zugeordneten Schalt-Ventileinheiten die Zufuhr von durch die Fahr-Hydraulikpumpe gefördertem Hydraulikfluid zu diesem Fahr-Hydraulikmotor freigeben und in der Hochdruck-Antriebszustand-Schaltstellung den zu diesem Fahr-Hydraulikmotor parallelen Bypass-Strömungsweg zur Erzeugung des Strömungskurzschlusses zwischen den Fluidanschlüssen dieses Fahr-Hydraulikmotors freigeben.

Um während des Betriebs, also bei vorhandenem Fluiddruck, wahlweise einen oder mehrere Fahr-Hydraulikmotoren ab- bzw. zuschalten zu können, wird vorgeschlagen, dass wenigstens eine, vorzugsweise jede Schalt-Ventileinheit als Proportionalventil ausgebildet ist. Die Zuschaltbarkeit eines oder mehrerer Fahr-Hydraulikmotoren während des Fahrbetriebs ist insbesondere dann von besonderem Vorteil, wenn diese auch genutzt werden sollen, um erforderlichenfalls ein Bremsmoment zu erzeugen.

Die eingangs angeführte Aufgabe wird weiter gelöst durch eine Bodenbearbeitungsmaschine, vorzugsweise Bodenverdichter, umfassend wenigstens eine Antriebsrolle und ein erfindungsgemäß aufgebautes elektrohydraulisches Antriebssystem.

Abhängig vom Einsatzzweck einer jeweiligen Bodenbearbeitungsmaschine kann wenigstens eine, vorzugsweise jede Antriebsrolle eine Bodenbearbeitungswalze umfassen. Auch kann vorgesehen sein, dass wenigstens eine Antriebsrolle wenigstens ein Rad, insbesondere Gummirad, umfasst.

Die eingangs angeführte Aufgabe wird weiter gelöst durch ein Verfahren zum Betreiben einer erfindungsgemäß aufgebauten Bodenbearbeitungsmaschine. Bei diesem Verfahren kann zumindest eine der folgenden Maßnahmen vorgesehen sein:
- in dem Hochdruck-Antriebszustand sind bei einem ersten Teil der Fahr-Hydraulikmotoren die jeweils zugeordneten Schalt-Ventileinheiten in die Hochdruck-Antriebszustand-Schaltstellung geschaltet,
- bei Übergang von dem Hochdruck-Antriebszustand in einen Bremszustand des elektrohydraulischen Antriebssystems wird wenigstens ein Teil der, vorzugsweise alle Schalt-Ventileinheiten des ersten Teils von Fahr-Hydraulikmotoren in die Grund-Antriebszustand-Schaltstellung geschaltet.

Um im Hochdruck-Antriebszustand ein ausreichendes Antriebsdrehmoment erzeugen zu können, kann bei dem erfindungsgemäßen Verfahren weiter vorgesehen sein, dass bei einem zweiten Teil der Fahr-Hydraulikmotoren die jeweils zugeordneten Schalt-Ventileinheiten in die Grund-Antriebszustand-Schaltstellung geschaltet sind.

Für eine definierte, gleichmäßige Lastverteilung beispielsweise auf zwei Achsen oder zwei Seiten der Bodenbearbeitungsmaschine kann vorgesehen sein, dass der erste Teil der Fahr-Hydraulikmotoren die Hälfte der Fahr-Hydraulikmotoren der Bodenbearbeitungsmaschine umfasst. Der zweite Teil der Fahr-Hydraulikmotoren kann dann beispielsweise die andere Hälfte der Fahr-Hydraulikmotoren der Bodenbearbeitungsmaschine umfassen.

Dabei können ferner die Fahr-Hydraulikmotoren des ersten Teils von Fahr-Hydraulikmotoren wenigstens einer um eine erste Drehachse drehbaren ersten Antriebsrolle der Bodenbearbeitungsmaschine zugeordnet sein, oder/und die Fahr-Hydraulikmotoren des zweiten Teils von Fahr-Hydraulikmotorenten können wenigstens einer um eine zweite Drehachse drehbaren zweiten Antriebsrolle der Bodenbearbeitungsmaschine zugeordnet sein. Damit können im Hochdruck-Betriebszustand alle aktiven Fahr-Hydraulikmotoren auf einer Achse wirken.

Für eine Lastverteilung auf zwei Achsen kann ein Teil der Fahr-Hydraulikmotoren des ersten Teils von Fahr-Hydraulikmotorenten wenigstens einer um eine erste Drehachse drehbaren ersten Antriebsrolle der Bodenbearbeitungsmaschine zugeordnet sein und ein Teil der Fahr-Hydraulikmotoren des zweiten Teils von Fahr-Hydraulikmotorenten der wenigstens einen um die erste Drehachse drehbaren ersten Antriebsrolle der Bodenbearbeitungsmaschine zugeordnet sein, oder/und kann ein Teil der Fahr-Hydraulikmotoren des ersten Teils von Fahr-Hydraulikmotorenten wenigstens einer um eine zweite Drehachse drehbaren zweiten Antriebsrolle der Bodenbearbeitungsmaschine zugeordnet sein und ein Teil der Fahr-Hydraulikmotoren des zweiten Teils von Fahr-Hydraulikmotorenten der wenigstens einen um die zweite Drehachse drehbaren zweiten Antriebsrolle der Bodenbearbeitungsmaschine zugeordnet sein.

Die vorliegende Erfindung wird nachfolgend mit Bezug auf die beiliegenden Figuren detailliert beschrieben. Es zeigt:
- Fig. 1: in prinzipartiger Darstellung eine Bodenbearbeitungsmaschine mit zwei jeweils eine Antriebsrolle bildenden Bodenbearbeitungswalzen;
- Fig. 2: eine der Fig. 1 entsprechende Darstellung einer alternativ ausgestalteten Bodenbearbeitungsmaschine, bei welcher ein Teil der Antriebsrollen durch Räder gebildet ist;
- Fig. 3: eine Ausgestaltungsart eines elektrohydraulischen Antriebssystems für eine Bodenbearbeitungsmaschine mit zwei Fahr-Hydraulikkreisläufen;
- Fig. 4: eine Ausgestaltungsart eines elektrohydraulischen Antriebssystems für eine Bodenbearbeitungsmaschine mit einem einzigen Fahr-Hydraulikkreislauf;
- Fig. 5: eine weitere Ausgestaltungsart eines elektrohydraulischen Antriebssystem für eine Bodenbearbeitungsmaschine mit einem einzigen Fahr-Hydraulikkreislauf.

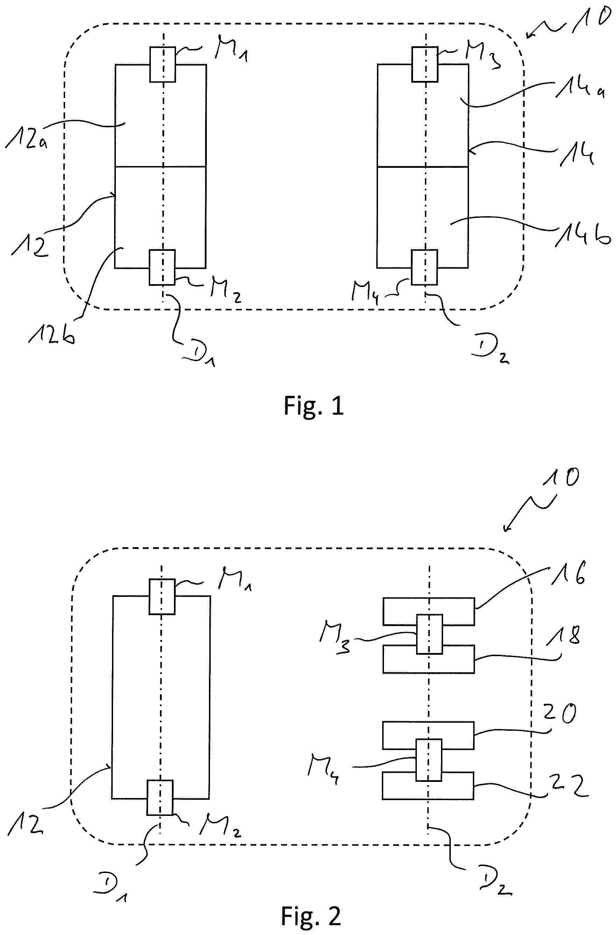

Die Fig. 1 zeigt in prinzipartiger Darstellung eine allgemein mit 10 bezeichnete und beispielsweise als Bodenverdichter ausgebildete Bodenbearbeitungsmaschine. Die als Bodenverdichter ausgebildete Bodenbearbeitungsmaschine 10 umfasst zwei in Längsrichtung derselben aufeinander folgend angeordnete und jeweils als Bodenbearbeitungswalze ausgebildete Antriebsrollen 12, 14. Die Antriebsrolle 12 ist um eine erste Drehachse D₁ drehbar, und die Antriebsrolle 14 ist um eine zweite Drehachse D₂ drehbar. Jeder der beiden Antriebsrollen 12, 14 sind zwei Fahr-Hydraulikmotoren M₁, M₂ bzw. M₃, M₄ zugeordnet. Beispielsweise können die einer jeweiligen Antriebsrolle 12 bzw. 14 zugeordneten Fahr-Hydraulikmotoren M₁, M₂, M₃, M₄ jeweils an deren axialen Enden angeordnet sein.

Die beiden Antriebsrollen 12, 14 können, wie dies in Figur 1 veranschaulicht ist, als geteilte Bodenbearbeitungswalzen mit jeweiligen Segmenten 12a, 12b und 14a, 14b ausgebildet sein. Jedem der Segmente ist einer der vier Fahr-Hydraulikmotoren M₁, M₂, M₃, M₄ zugeordnet, so dass die beiden Segmente 12a, 12b durch die diesen zugeordneten Fahr-Hydraulikmotoren M₁, M₂ voneinander unabhängig zur Drehung um die Drehachse D₁ angetrieben werden können und die beiden Segmente 14a, 14b durch die diesen zugeordneten Fahr-Hydraulikmotoren M₃, M₄ voneinander unabhängig zur Drehung um die Drehachse D₂ angetrieben werden können. Grundsätzlich könnte aber zumindest eine der beiden Antriebsrolle 12,14 als in sich starre und an ihren beiden axialen Enden durch die jeweils zugeordneten Fahr-Hydraulikmotoren zur Drehung angetriebene Bodenbearbeitungswalze ausgebildet sein.

Die Fig. 2 zeigt eine alternative Ausgestaltungsart einer derartigen beispielsweise als Bodenbearbeitungswalze ausgebildeten Bodenbearbeitungsmaschine 10. Die Bodenbearbeitungsmaschine 10 der Fig. 2 umfasst in einem ihrer Längsendbereiche wiederum die als Bodenbearbeitungswalze ausgebildete Antriebsrolle 12 mit den beiden dieser zugeordneten Fahr-Hydraulikmotoren M₁, M₂. Auch bei dieser Ausgestaltung kann die Antriebsrolle 12 als in sich starre und an ihren beiden axialen Enden durch die jeweils zugeordneten Fahr-Hydraulikmotoren zur Drehung angetriebene Bodenbearbeitungswalze ausgebildet sein oder kann, so wie dies in Fig. 1 dargestellt ist, zwei durch einen jeweils zugeordneten Fahr-Hydraulikmotor unabhängig voneinander zur Drehung um die Drehachse D₁ antreibbare Segmente umfassen. Im anderen Längsendbereich der Bodenbearbeitungsmaschine 10 sind jeweils als Räder ausgebildete Antriebsrollen 16, 18, 20, 22 vorgesehen. Diese können einander beispielsweise paarweise zugeordnet sein und jedes Paar aus Rädern bzw. Antriebsrollen 16, 18 bzw. 20, 22 kann durch den diesem zugeordneten Fahr-Hydraulikmotor M₃ bzw. M₄ zur Drehung angetrieben werden.

Es ist darauf hinzuweisen, dass auch andere Ausgestaltungsarten von derartigen Bodenbearbeitungsmaschinen im Kontext eines nachfolgend beschriebenen elektrohydraulischen Antriebssystems Anwendung finden können. So kann beispielsweise bei einer als Bodenverdichter ausgebildeten Bodenbearbeitungsmaschine an einem Hinterwagen ein Paar von jeweils eine Antriebsrolle bildenden Antriebsrädern vorgesehen sein, während am Vorderwagen eine Bodenbearbeitungswalze als Antriebsrolle wirken kann. Die Prinzipien der vorliegenden Erfindung können sowohl bei schemelgelenkten Bodenbearbeitungsmaschinen bzw. Bodenverdichtern, als auch bei in Vorderwagen und Hinterwagen untergliederten Bodenbearbeitungsmaschinen Anwendung finden.

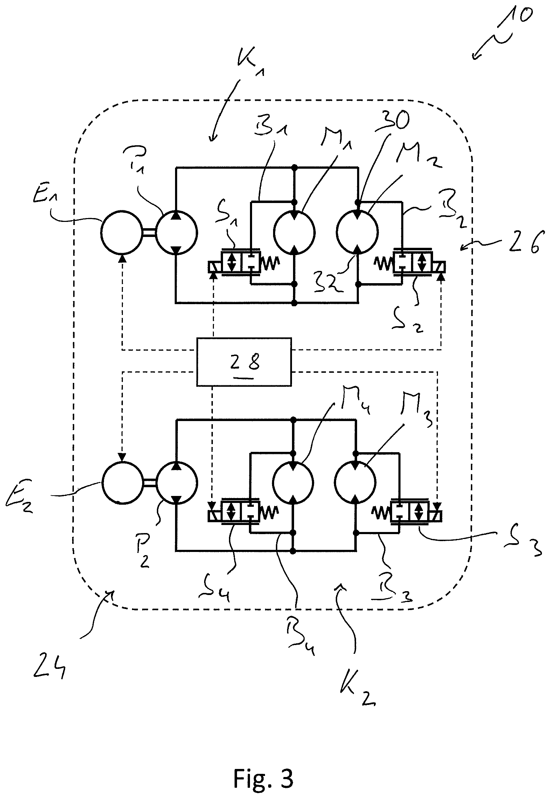

In Fig. 3 ist ein gemäß den Prinzipien der vorliegenden Erfindung aufgebautes elektrohydraulisches Antriebssystem beispielsweise für eine in den Fig. 1 bzw. 2 dargestellte Bodenbearbeitungsmaschine 10 allgemein mit 24 bezeichnet. Das elektrohydraulische Antriebssystem 24 umfasst im dargestellten Ausgestaltungsbeispiel zwei Fahr-Hydraulikkreisläufe K₁, K₂. Dem Fahr-Hydraulikkreislauf K₁ können die beiden Fahr-Hydraulikmotoren M₁, M₂ zugeordnet sein, und dem Fahr-Hydraulikkreislauf K₂ können die beiden Fahr-Hydraulikmotoren M₃, M₄ zugeordnet sein.

Dem Fahr-Hydraulikkreislauf K₁ ist ferner eine Fahr-Hydraulikpumpe P₁ zugeordnet, welche durch einen dieser individuell zugeordneten Elektroantriebsmotor E₁ zum Fördern von Fluid durch den Fahr-Hydraulikkreislauf K₁ und die in diesem parallel zueinander angeordneten Fahr-Hydraulikmotoren M₁, M₂ angetrieben werden kann. Gleichermaßen ist dem Fahr-Hydraulikkreislauf K₂ eine Fahr-Hydraulikpumpe P₂ zugeordnet. Die Fahr-Hydraulikpumpe P₂ wird von einem dieser zugeordneten Elektroantriebsmotor E₂ zum Fördern von Fluid durch den Fahr-Hydraulikkreislauf K₂ und die zueinander parallel geschalteten und somit von Hydraulikfluid durchströmbaren Fahr-Hydraulikmotoren M₃, M₄ angetrieben.

In Zuordnung zu jedem der Fahr-Hydraulikmotoren M₁, M₂, M₃, M₄ ist ein zu diesem parallel geschalteter Bypass-Strömungsweg B₁, B₂, B₃, B₄ vorgesehen. Eine allgemein mit 26 bezeichnete Ventilanordnung des elektrohydraulischen Antriebssystems umfasst in Zuordnung zu jedem der vier Fahr-Hydraulikmotoren M₁, M₂, M₃, M₄ eine im jeweils zugeordneten Bypass-Strömungsweg B₁, B₂, B₃, B₄ angeordnete Schalt-Ventileinheit S₁, S₂, S₃, S₄.

Ebenso wie die beiden Elektroantriebsmotoren E₁, E₂ stehen die Schalt-Ventileinheiten S₁, S₂, S₃, S₄ unter der Ansteuerung einer allgemein mit 28 bezeichneten Ansteuereinheit. Durch die Ansteuereinheit 28 können die Schalt-Ventileinheiten S₁, S₂, S₃, S₄ zwischen einer Grund-Antriebszustand-Schaltstellung und einer Hochdruck-Antriebszustand-Schaltstellung umgeschaltet werden. In der in Zuordnung mit jeder der Schalt-Ventileinheiten S₁, S₂, S₃, S₄ dargestellten Grund-Antriebszustand-Schaltstellung ist der jeweils zugeordnete Bypass-Strömungsweg B₁, B₂, B₃, B₄ gegen Durchströmung mit Hydraulikfluid abgesperrt, so dass das vermittels der jeweilige Fahr-Hydraulikpumpe P₁ bzw. P₂ durch den jeweiligen Fahr-Hydraulikkreislauf K₁, K₂ geförderte Hydraulikfluid jeweils beide Fahr-Hydraulikmotoren M₁, M₂, M₃, M₄ durchströmt und daher durch alle vier Fahr-Hydraulikmotoren M₁, M₂, M₃, M₄ vorzugsweise jeweils das gleiche Antriebsdrehmoment erzeugt wird.

In einer Hochdruck-Antriebszustand-Schaltstellung der Schalt-Ventileinheiten S₁, S₂, S₃, S₄ ist der jeweils zugeordnete Bypass-Strömungsweg B₁, B₂, B₃, B₄ zur Durchströmung mit Hydraulikfluid freigegeben, so dass, sofern die jeweils zugeordnete Fahr-Hydraulikpumpe P₁, P₂ noch betrieben wird, aufgrund des geringeren Strömungswiderstandes das von der jeweiligen Fahr-Hydraulikpumpe P₁, P₂ geförderte Hydraulikfluid am jeweils zugeordneten Fahr-Hydraulikmotor M₁, M₂, M₃, M₄ vorbei gefördert wird und in einem Fahr-Hydraulikmotor M₁, M₂, M₃, M₄, dessen zugeordnete Schalt-Ventileinheit S₁, S₂, S₃, S₄ in die Hochdruck-Betriebszustand-Schaltstellung gestellt ist, kein Antriebsdrehmoment erzeugt wird. Grundsätzlich ist im Hochdruck-Antriebszustand des elektrohydraulischen Antriebssystems 24 bzw. bei in den Hochdruck-Antriebszustand-Schaltzustand geschalteten Schalt-Ventileinheiten S₁, S₂ bzw. S₃, S₄ das Betreiben der zugeordneten Fahr-Hydraulikpumpe P₁ bzw. P₂ nicht erforderlich. Bei deaktivierter Fahr-Hydraulikpumpe P₁ bzw. P₂ wälzen die Fahr-Hydraulikmotoren M₁, M₂ bzw. M₃, M₄, angetrieben durch die jeweils zugeordnete und auf dem Untergrund abrollende Antriebsrolle, Fluid zwischen deren über den jeweils zugeordneten Bypass-Strömungsweg B₁, B₂ bzw. B₃, B₄ kurzgeschlossenen Fluidanschlüssen 30, 32 um

Es ist darauf hinzuweisen, dass die Schalt-Ventileinheiten S₁, S₂, S₃, S₄ beispielsweise als Proportionalventile ausgebildet sein können, so dass diese auch im Fahrbetrieb zwischen ihren beiden Schaltstellungen umgeschaltet werden können, ohne dass dabei Schaltstöße auftreten. Bei einfacherer Ausgestaltung können diese Schalt-Ventileinheiten S₁, S₂, S₃, S₄ als Stetig-Ventile bzw. binär wirkende Ventile ausgebildet sein, die nur zwischen einem Offenzustand und einem geschlossen Zustand umgeschaltet werden können. Um Schaltstöße zu vermeiden, ist es vorteilhaft, derartige Ventile im Stillstand, also drucklos, zwischen der beiden Schaltstellungen umzuschalten.

In einem normalen Arbeitsbetrieb der beispielsweise als Bodenverdichter ausgebildeten Bodenbearbeitungsmaschine 10 bzw. des in Fig. 3 dargestellten elektrohydraulischen Antriebssystems 24 werden die beiden Fahr-Hydraulikpumpen P₁, P₂ durch die zugeordneten Elektroantriebsmotoren E₁, E₂ angetrieben. Die Schalt-Ventileinheiten S₁, S₂, S₃, S₄ sind in ihrer Grund-Antriebszustand-Schaltstellung, in welcher sie die Bypass-Strömungswege B₁, B₂, B₃, B₄ gegen Durchströmung sperren, so dass das von den Fahr-Hydraulikpumpen P₁, P₂ geförderte Fluid durch die jeweils zugeordneten Fahr-Hydraulikmotoren M₁, M₂, M₃, M₄ strömt und jeder dieser Fahr-Hydraulikmotoren M₁, M₂, M₃, M₄ einen Teil des gesamten Antriebsdrehmoments erzeugt. Dabei können beispielsweise die beiden Fahr-Hydraulikpumpen P₁, P₂ als Fest-Fördervolumen-Pumpen ausgebildet sein, und die Fahr-Hydraulikmotoren M₁, M₂, M₃, M₄ können als Fest-Schluckvolumen-Motoren ausgebildet sein. Eine Veränderung des Fahrzustands kann dann durch entsprechende Ansteuerung der Elektroantriebsmotoren E₁, E₂ zur Veränderung der Drehzahl derselben und damit auch der Drehzahl bzw. Fördermenge der Fahr-Hydraulikpumpen P₁, P₂ herbeigeführt werden.

Soll beispielsweise dann, wenn die Bodenbearbeitungsmaschine 10 sich in einer Überführungsfahrt zwischen zwei Baustellen befindet, in den Hochdruck-Antriebszustand übergegangen werden, so können beispielsweise die der Antriebsrolle 14 zugeordneten Fahr-Hydraulikmotoren M₃, M₄ deaktiviert werden. Hierzu werden die diesen zugeordneten Schalt-Ventileinheiten S₃, S₄ in ihre Hochdruck-Antriebszustand-Schaltstellung gestellt, in welcher sie den jeweils zugeordneten Bypass-Strömungsweg B₃, B₄ zur Durchströmung freigeben. Gleichzeitig kann das Antreiben der Fahr-Hydraulikpumpe P₂ eingestellt werden, so dass durch diese kein Fluid durch den Fluidkreislauf K₂ gefördert wird. Die Fahr-Hydraulikmotoren M₃, M₄ sind über die diesen jeweils zugeordneten, zur Durchströmung offenen Bypass-Strömungswege kurzgeschlossen, so dass diese bei Abrollen der Antriebsrolle 14 mitdrehen können und Fluid über den einen Strömungskurzschluss herstellenden Bypass-Strömungsweg B₃ bzw. B₄ umwälzen können. Alternativ ist es in diesem Zustand auch möglich, die Fahr-Hydraulikpumpe P₂ weiter zu betreiben, um ein Blockieren der Fahr-Hydraulikmotoren M₃, M₄ und ein dadurch möglicherweise erzeugtes Schleifen der Antriebsrolle 14 über den Boden auszuschließen.

In diesem Hochdruck-Antriebszustand des elektrohydraulischen Antriebssystems 24 wird das gesamte Antriebsdrehmoment dann durch die von der Fahr-Hydraulikpumpe P₁ gespeisten Fahr-Hydraulikmotoren M₁, M₂ des Fahr-Hydraulikkreislaufs K₁ generiert. Der dazu erforderliche höhere Fluiddruck im Fahr-Hydraulikkreislauf K₁ wird durch eine entsprechend höhere Antriebsleistung des Elektroantriebsmotors E₁ generiert. Aufgrund des Umstandes, dass in diesem Zustand der Fahr-Hydraulikkreislauf K₁ mit einem Fluiddruck arbeitet, der im Wesentlichen dem Doppelten des Fluiddrucks im Grund-Antriebszustand entspricht, werden die Fahr-Hydraulikmotoren M₁, M₂ mit deutlich höherem Wirkungsgrad betrieben, was die durch die Umwälzung von Fluid durch die mitgeschleppten Fahr-Hydraulikmotoren M₃, M₄ erzeugten Energieverluste überkompensiert.

Um beispielsweise bei Bergabfahrt ein ausreichendes Bremsmoment erzeugen zu können, kann bei Übergang in einen Bremszustand aus dem Hochdruck-Antriebszustand der Fahr-Hydraulikkreislauf K₂ der zunächst nicht angetriebenen Antriebsrolle 14 wieder aktiviert werden. Hierzu werden die Schalt-Ventileinheiten S₃, S₄ in ihre Grund-Antriebszustand-Schaltstellung geschaltet, so dass im Bremszustand durch die durch die Antriebsrolle 14 angetriebenen Fahr-Hydraulikmotoren M₃, M₄ bzw. die Fahr-Hydraulikpumpe P₁ ein Bremsmoment generiert wird, welches beispielsweise auch genutzt werden kann, über den dann als Generator betriebenen Elektroantriebsmotor E₂ elektrische Energie zurückzuspeisen.

Bei dem in Fig. 3 dargestellten elektrohydraulischen Antriebssystem 24 können verschiedene bauliche Variationen bzw. auch Variationen im Betrieb vorgesehen sein. Während im vorangehend beschriebenen Hochdruck-Antriebszustand eine Antriebsrolle bzw. ggf. die um die gleiche Drehachse drehbaren Segmente einer Antriebsrolle bzw. Bodenbearbeitungswalze zur Erzeugung des Antriebsdrehmoments genutzt werden, ist es auch möglich, das Antriebsdrehmoment auf beide Antriebsrollen 12, 14 zu verteilen. Hierzu ist es erforderlich, bei den Fahr-Hydraulikkreisläufen K₁, K₂ jeweils einen Fahr-Hydraulikmotor einer der beiden Antriebsrollen und einen Fahr-Hydraulikmotor der anderen Antriebsrolle zuzuordnen. Beispielsweise könnten dem Fahr-Hydraulikkreislauf K₁ die Fahr-Hydraulikmotoren M₁, M₄ zugeordnet sein, und dem Fahr-Hydraulikkreislauf K₂ könnten die Fahr-Hydraulikmotoren M₂, M₃ zugeordnet sein. Im Hochdruck-Antriebszustand kann dann jeweils einer der in Bezug auf eine der Drehachsen wirksamen Fahr-Hydraulikmotoren ein Antriebsdrehmoment generieren, während der andere der gleichen Drehachse zugeordnete Fahr-Hydraulikmotor mitgeschleppt wird. Eine derartige Anordnung ist dann besonders vorteilhaft, wenn die Antriebsrollen 12, 14 nicht geteilt, sondern als in sich starre Bodenbearbeitungswalzen ausgebildet sind. Grundsätzlich kann jedoch auch bei in Segmente aufgeteilten Antriebsrollen 12, 14 mit derartiger auf die verschiedenen Drehachsen zugeordneten Segmente aufgeteilter Antriebswirkung gearbeitet werden.

Bei der in Fig. 3 dargestellten Bodenbearbeitungsmaschine 10 bzw. dem in Fig. 3 dargestellten elektrohydraulischen Antriebssystem 24 könnte beispielsweise auch nur einer der beiden Fahr-Hydraulikkreisläufe K₁, K₂ zwischen dem Grund-Antriebszustand und dem Hochdruck-Antriebszustand umschaltbar sein, während der andere Fahr-Hydraulikkreislauf dann auch im Hochdruck-Antriebszustand des elektrohydraulischen Antriebssystems 24 dazu genutzt wird, das Antriebsdrehmoment zu erzeugen. Weiter könnten die Fahr-Hydraulikkreisläufe K₁, K₂ hinsichtlich der Ventilanordnung 26 so ausgebildet sein, dass diese in Zuordnung zu den zueinander paarweise parallel geschalteten Fahr-Hydraulikmotoren M₁, M₂ bzw. M₃, M₄ jeweils nur einen von diesen gemeinsam genutzten Bypass-Strömungsweg und daher auch nur eine einzige Schalt-Ventileinheit umfasst.

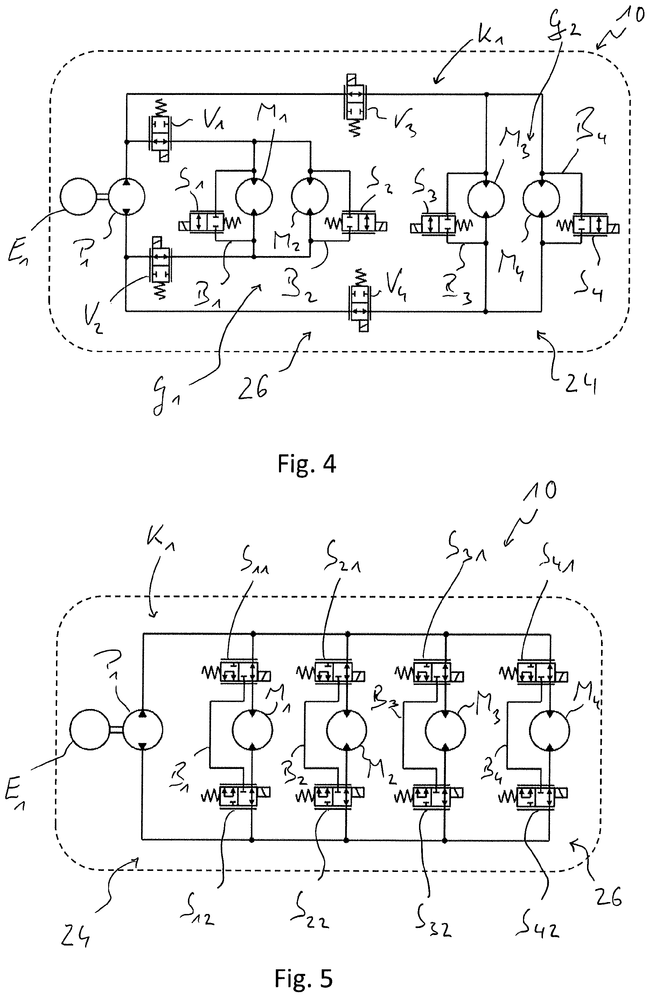

Eine alternative Ausgestaltung eines elektrohydraulischen Antriebssystems 24 ist in Fig. 4 dargestellt. Dieses elektrohydraulische Antriebssystem 24 umfasst nur einen einzigen Fahr-Hydraulikkreislauf K₁ mit einer einzigen Fahr-Hydraulikpumpe P₁ und einem dieser zugeordneten Elektroantriebsmotor E₁. Die vier Fahr-Hydraulikmotoren M₁, M₂, M₃, M₄ sind in zwei Gruppen G₁, G₂ aufgeteilt. Die Gruppe G₁ umfasst die Fahr-Hydraulikmotoren M₁, M₂, und die Gruppe G₂ umfasst die Fahr-Hydraulikmotoren M₃, M₄. In jeder Gruppe G₁, G₂ sind die Fahr-Hydraulikmotoren M₁, M₂ bzw. M₃, M₄ zueinander parallel geschaltet, und die beiden Gruppen G₁, G₂ werden durch die Fahr-Hydraulikpumpe P₁ zueinander parallel mit Fluid gespeist.

In Zuordnung zu jedem der Fahr-Hydraulikmotoren M₁, M₂ bzw. M₃, M₄ ist ein zu diesem paralleler Bypass-Strömungsweg B₁, B₂, B₃, B₄ jeweils mit einer darin vorgesehenen Schalt-Ventileinheit S₁, S₂, S₃, S₄ vorgesehen. Auch hier könnte in Verbindung mit den jeweils paarweise in einer Gruppe G₁, G₂ vorgesehenen Fahr-Hydraulikmotoren M₁, M₂ bzw. M₃, M₄ jeweils nur ein gemeinsam genutzter Bypass-Strömungsweg mit einer einzigen Schalt-Ventileinheit vorgesehen sein.

Die Ventilanordnung 26 umfasst in Zuordnung zu jeder der beiden Gruppen G₁, G₂ ferner zwei Sperr-Ventileinheiten V₁, V₂ bzw. V₃, V₄. Die beispielsweise auch als Proportionalventile ausgebildeten Sperr-Ventileinheiten V₁, V₂, V₃, V₄ sind in Strömungsrichtung beidseits des jeweils zugeordneten Paares von Fahr-Hydraulikmotoren M₁, M₂ bzw. M₃, M₄ angeordnet und stehen, ebenso wie die Schalt-Ventileinheiten S₁, S₂, S₃, S₄ unter der Ansteuerung der in Fig. 3 dargestellten Ansteuereinheit 28.

Im Grund-Antriebszustand sind die Sperr-Ventileinheiten V₁, V₂, V₃, V₄ in der in Fig. 4 dargestellten Grund-Antriebszustand-Schaltstellung, in welcher sie die Fluidzufuhr zu allen Fahr-Hydraulikmotoren M₁, M₂, M₃, M₄ freigeben. Die Schalt-Ventileinheiten S₁, S₂, S₃, S₄ sind ebenfalls in der Grund-Antriebszustand-Schaltstellung und schließen daher die Bypass-Strömungswege B₁, B₂, B₃, B₄ ab.

Soll in den Hochdruck-Antriebszustand übergegangen werden und sollen dabei beispielsweise die Fahr-Hydraulikmotoren M₁, M₂ der Gruppe G₁ zur Erzeugung des Antriebsdrehmoments genutzt werden, bleiben die diesen zugeordneten Sperr-Ventileinheiten V₁, V₂ und Schalt-Ventileinheiten S₁, S₂ in der Grund-Antriebszustand-Schaltstellung. Die den Fahr-Hydraulikmotoren M₃, M₄ der Gruppe G₂ zugeordneten Sperr-Ventileinheiten V₃, V₄ und Schalt-Ventileinheiten S₃, S₄ werden in die Hochdruck-Antriebszustand-Schaltstellung geschaltet, in welcher einerseits die Zufuhr von Fluid zu den Fahr-Hydraulikmotoren M₃, M₄ durch die Sperr-Ventileinheiten V₃, V₄ unterbunden wird und andererseits die Bypass-Strömungswege B₃, B₄ durch die darin jeweils vorgesehenen Schalt-Ventileinheiten S₃, S₄ zur Durchströmung freigegeben werden. Die Fahr-Hydraulikmotoren M₃, M₄ werden dann durch die diesen zugeordnete Antriebsrolle mitgeschleppt und können über den jeweils zugeordneten Bypass-Strömungsweg B₃, B₄ Fluid umwälzen.

Auch bei dieser Ausgestaltungsart eines elektrohydraulischen Antriebssystems 24 kann durch Auswahl der Zuordnung der verschiedenen Fahr-Hydraulikmotoren M₁, M₂, M₃, M₄ zu den beiden Gruppen G₁, G₂ im Hochdruck-Antriebszustand das Antriebsdrehmoment entweder auf eine Antriebsrolle bzw. zwei um die gleiche Drehachse drehbare Segmente einer Antriebsrolle übertragen werden, während an der anderen Achse kein Antriebsdrehmoment erzeugt wird, oder es kann jeweils ein Teil des Antriebsdrehmoments an jeder der beiden Achsen erzeugt werden, beispielsweise an segmentierten Antriebsrollen oder in sich starren Antriebsrollen.

Eine weitere Ausgestaltungsart eines elektrohydraulischen Antriebssystems 24 ist in Fig. 5 dargestellt. Auch dieses elektrohydraulische Antriebssystem 24 umfasst nur einen einzigen Fahr-Hydraulikkreislauf K₁ mit einer einzigen Fahr-Hydraulikpumpe P₁. Die vier Fahr-Hydraulikmotoren M₁, M₂, M₃, M₄ sind zueinander parallel geschaltet und werden durch die Fahr-Hydraulikpumpe P₁ parallel mit Fluid gespeist.

Die Ventilanordnung 26 umfasst in Zuordnung zu jedem Fahr-Hydraulikmotor M₁, M₂, M₃, M₄ bzw. in Zuordnung zu jedem Bypass-Strömungsweg B₁, B₂, B₃, B₄ zwei in Strömungsrichtung beidseits des jeweils zugeordneten Fahr-Hydraulikmotors M₁, M₂, M₃, M₄ positionierte Schalt-Ventileinheiten S₁₁, S₁₂, S₂₁, S₂₂, S₃₁, S₃₂, S₄₁, S₄₂. In der in Fig. 5 dargestellten Grund-Antriebszustand-Schaltstellung der Schalt-Ventileinheiten S₁₁, S₁₂, S₂₁, S₂₂, S₃₁, S₃₂, S₄₁, S₄₂ sind die mit diesen zusammenwirkenden Bypass-Strömungswege B₁, B₂, B₃, B₄ gegen Durchströmung abgesperrt, so dass die Fluidanschlüsse 30, 32 der Fahr-Hydraulikmotoren M₁, M₂, M₃, M₄ zur Aufnahme von durch die Fahr-Hydraulikpumpe P₁ gefördertem Fluid offen sind bzw. zur Abgabe von Fluid in Richtung zur Fahr-Hydraulikpumpe P₁ offen sind.

Bei Übergang in den Hochdruck-Antriebszustand kann bei zumindest einem der Fahr-Hydraulikmotoren M₁, M₂, M₃, M₄ das zugeordnete Paar von Schalt-Ventileinheiten S₁₁, S₁₂ bzw. S₂₁, S₂₂ bzw. S₃₁, S₃₂ bzw. S₄₁, S₄₂ in die Hochdruck-Antriebszustand-Schaltstellung gebracht werden, in welcher die Fluidanschlüsse 30, 32 des zugeordneten Fahr-Hydraulikmotors M₁, M₂, M₃, M₄ von der Fahr-Hydraulikpumpe P₁ bzw. vom Fahr-Hydraulikkreislauf K₁ entkoppelt sind und mit dem zugeordneten Bypass-Strömungsweg B₁, B₂, B₃, B₄ verbunden sind. Jeder im Hochdruck-Antriebszustand nicht zur Erzeugung eines Antriebsdrehmoments genutzte Fahr-Hydraulikmotor M₁, M₂, M₃, M₄ kann dann über den zugeordneten Bypass-Strömungsweg B₁, B₂, B₃, B₄ Fluid umwälzen.

Bei der in Fig. 5 dargestellten Ausgestaltungsart kann beliebig jeder Fahr-Hydraulikmotor M₁, M₂, M₃, M₄ zur Erzeugung eines Antriebsdrehmoments genutzt werden bzw. deaktiviert werden, so dass im Hochdruck-Antriebszustand beispielsweise auch nur ein einziger Fahr-Hydraulikmotor zum Antreiben der Bodenbearbeitungsmaschine 10 genutzt wird oder ggf. drei der vier Fahr-Hydraulikmotoren zum Erzeugen eines Antriebsdrehmoments genutzt werden können.

Um bei dieser Ausgestaltungsart während der Voranbewegung der Bodenbearbeitungsmaschine 10 zwischen den verschiedenen Antriebszuständen umschalten zu können und bei im Hochdruck-Antriebszustand betriebener Bodenbearbeitungsmaschine 10 das Zuschalten von Fahr-Hydraulikmotoren zum Erzeugen eines Bremsmoments zu ermöglichen, können die Schalt-Ventileinheiten S₁₁, S₁₂, S₂₁, S₂₂, S₃₁, S₃₂, S₄₁, S₄₂ als Proportionalventile ausgebildet sein, welche beim Umschalten zwischen den verschiedenen Schaltzuständen einen allmählichen, Schaltstöße vermeidenden Übergang ermöglichen.

Weiter ist darauf hinzuweisen, dass die vorliegende Erfindung auch Anwendung finden kann bei einem elektrohydraulischen Antriebssystem für eine Bodenbearbeitungsmaschine mit nur zwei Fahr-Hydraulikmotoren, beispielsweise jeweils in Zuordnung zu zwei ungeteilten Bodenbearbeitungswalzen. Im Hochdruck-Antriebszustand kann dann nur einem der beiden Fahr-Hydraulikmotoren Fluid mit entsprechend erhöhtem Druck zugeführt werden, während dem anderen Fahr-Hydraulikmotor kein Fluid geführt wird.

## Patentansprüche

1. Elektrohydraulisches Antriebssystem für eine Bodenbearbeitungsmaschine mit wenigstens einer Antriebsrolle, umfassend:
- wenigstens eine durch einen Antriebselektromotor (E₁, E₂) zum Fördern von Hydraulikfluid antreibbare Fahr-Hydraulikpumpe (P₁, P₂),
- wenigstens zwei vermittels der wenigstens einen Fahr-Hydraulikpumpe (P₁, P₂) mit Hydraulikfluid zu speisende Fahr-Hydraulikmotoren (M₁, M₂ M₃, M₄),
- eine Ventilanordnung (26),
- eine Ansteuereinheit (28) zum Betreiben der Ventilanordnung (26) derart, dass in einem Grund-Antriebszustand des elektrohydraulischen Antriebssystems (24) jeder Fahr-Hydraulikmotor (M₁, M₂ M₃, M₄) zur Erzeugung eines Antriebsdrehmoments von der wenigstens einen Fahr-Hydraulikpumpe (P₁, P₂) mit Hydraulikfluid gespeist wird und in einem Hochdruck-Antriebszustand des elektrohydraulischen Antriebssystems (24) wenigstens ein Fahr-Hydraulikmotor (M₁, M₂ M₃, M₄) nicht zur Erzeugung eines Antriebsdrehmoments von der wenigstens einen Fahr-Hydraulikpumpe (P₁, P₂) mit Hydraulikfluid gespeist wird.

2. Elektrohydraulisches Antriebssystem nach Anspruch 1,
**dadurch gekennzeichnet, dass** wenigstens ein Hydraulikkreislauf (K₁, K₂) mit wenigstens zwei von wenigstens einer Fahr-Hydraulikpumpe (P₁, P₂) parallel mit Hydraulikfluid gespeisten Fahr-Hydraulikmotoren (M₁, M₂ M₃, M₄) vorgesehen ist, und dass die Ventilanordnung (26) in Zuordnung zu den wenigstens zwei Fahr-Hydraulikmotoren (M₁, M₂ M₃, M₄) wenigstens eines Fahr-Hydraulikkreislaufs (K1, K₂) wenigstens eine Schalt-Ventileinheit (S₁, S₂, S₃, S₄) umfasst.

3. Elektrohydraulisches Antriebssystem nach Anspruch 2,
**dadurch gekennzeichnet, dass** dann, wenn die einem Fahr-Hydraulikmotor (M₁, M₂ M₃, M₄) zugeordnete wenigstens eine Schalt-Ventileinheit (S₁, S₂, S₃, S₄) in eine Grund-Antriebszustand-Schaltstellung geschaltet ist, diesem Fahr-Hydraulikmotor (M₁, M₂ M₃, M₄) von der wenigstens einen Fahr-Hydraulikpumpe (P₁, P₂) gefördertes Hydraulikfluid zum Erzeugen eines Antriebsdrehmoments zugeführt wird, und dann, wenn die einem Fahr-Hydraulikmotor (M₁, M₂ M₃, M₄) zugeordnete wenigstens eine Schalt-Ventileinheit (S₁, S₂, S₃, S₄) in eine Hochdruck-Antriebszustand-Schaltstellung geschaltet ist, ein diesem Fahr-Hydraulikmotor (M₁, M₂ M₃, M₄) zugeordneter, zu diesem paralleler Bypass-Strömungsweg (B₁, B₂, B₃, B₄) zur Durchströmung offen ist oder/und einen Strömungskurzschluss zwischen zwei Fluidanschlüssen (30, 32) des Fahr-Hydraulikmotors (M₁, M₂ M₃, M₄) erzeugt.

4. Elektrohydraulisches Antriebssystem nach Anspruch 2 oder 3,
**dadurch gekennzeichnet, dass** wenigstens zwei Fahr-Hydraulikkreisläufe (K₁, K₂) vorgesehen sind, wobei jedem Fahr-Hydraulikkreislauf (K₁, K₂) eine Fahr-Hydraulikpumpe (P₁, P₂) und wenigstens zwei von der Fahr-Hydraulikpumpe (P₁, P₂) parallel mit Hydraulikfluid gespeiste Fahr-Hydraulikmotoren (M₁, M₂ M₃, M₄) zugeordnet sind,
vorzugsweise wobei jeder Fahr-Hydraulikpumpe (P₁, P₂) ein Elektroantriebsmotor (E₁, E₂) zugeordnet ist.

5. Elektrohydraulisches Antriebssystem nach Anspruch 4, sofern auf Anspruch 3 rückbezogen,
**dadurch gekennzeichnet, dass** die Ventilanordnung (26) in jedem der Fahr-Hydraulikkreisläufe (K₁, K₂) in Zuordnung zu jedem Fahrt-Hydraulikmotor (M₁, M₂ M₃, M₄) eine den zu diesem parallelen Bypass-Strömungsweg (B₁, B₂, B₃, B₄) in der Grund-Antriebszustand-Schaltstellung absperrende und in der Hochdruck-Antriebszustand-Schaltstellung zur Durchströmung freigebende Schalt-Ventileinheit (S₁, S₂, S₃, S₄) umfasst.

6. Elektrohydraulisches Antriebssystem nach Anspruch 2 oder 3,
**dadurch gekennzeichnet, dass** wenigstens ein Fahr-Hydraulikkreislauf (K₁) vorgesehen ist, wobei dem wenigstens einen Fahr-Hydraulikkreislauf (K₁) eine Fahr-Hydraulikpumpe (P₁) und wenigstens zwei, vorzugsweise wenigstens vier, von der Fahr-Hydraulikpumpe (P₁) parallel mit Hydraulikfluid gespeiste Fahr-Hydraulikmotoren (M₁, M₂ M₃, M₄) zugeordnet sind.

7. Elektrohydraulisches Antriebssystem nach Anspruch 6, sofern auf Anspruch 3 rückbezogen
**dadurch gekennzeichnet, dass** die Ventilanordnung (26) in Zuordnung zu jedem Fahr-Hydraulikmotor (M₁, M₂ M₃, M₄) eine den zu diesem parallelen Bypass-Strömungsweg (B₁, B₂, B₃, B₄) in der Grund-Antriebszustand-Schaltstellung absperrende und in der Hochdruck-Antriebszustand-Schaltstellung zur Durchströmung freigebende Schalt-Ventileinheit (S₁, S₂, S₃, S₄) umfasst.

8. Elektrohydraulisches Antriebssystem nach Anspruch 6 oder 7,
**dadurch gekennzeichnet, dass** die Fahr-Hydraulikmotoren (M₁, M₂ M₃, M₄) wenigstens zwei von der Fahr-Hydraulikpumpe (P₁) parallel gespeiste Fahr-Hydraulikmotor-Gruppen (G₁, G₂) mit jeweils wenigstens zwei von der Fahr-Hydraulikpumpe (P₁) parallel gespeisten Fahr-Hydraulikmotoren (M₁, M₂ M₃, M₄) bilden, wobei die Ventilanordnung (26) in Zuordnung zu jeder Fahr-Hydraulikmotor-Gruppe (G₁, G₂) wenigstens eine Sperr-Ventileinheit (V₁, V₂, V₃, V₄) zum wahlweisen Sperren dieser Fahr-Hydraulikmotor-Gruppe (G₁, G₂) gegen die Zufuhr von durch die Fahr-Hydraulikpumpe (P₁) gefördertem Hydraulikfluid und Freigeben dieser Fahr-Hydraulikmotor-Gruppe (G₁, G₂) zur Zufuhr von durch die Fahr-Hydraulikpumpe (P₁) gefördertem Hydraulikfluid umfasst,
vorzugsweise wobei die Ventilanordnung (26) in Zuordnung zu jeder Fahr-Hydraulikmotor-Gruppe (G₁, G₂) zwei in Fluidströmungsrichtung beidseits dieser Fahr-Hydraulikmotor-Gruppe (G₁, G₂) angeordnete Sperr-Ventileinheiten (S₁, S₂, S₃, S₄) umfasst.

9. Elektrohydraulisches Antriebssystem nach Anspruch 6, sofern auf Anspruch 3 rückbezogen,
**dadurch gekennzeichnet, dass** die Ventilanordnung (26) in Zuordnung zu jedem Fahr-Hydraulikmotor (M₁, M₂ M₃, M₄) zwei Schalt-Ventileinheiten (S₁₁, S₁₂, S₂₁, S₂₂, S₃₁, S₃₂, S₄₁, S₄₂) umfasst, wobei in der Grund-Antriebszustand-Schaltstellung die einem jeweiligen Fahr-Hydraulikmotor (M₁, M₂, M₃, M₄) zugeordneten Schalt-Ventileinheiten (S₁₁, S₁₂, S₂₁, S₂₂, S₃₁, S₃₂, S₄₁, S₄₂) die Zufuhr von durch die Fahr-Hydraulikpumpe (P') gefördertem Hydraulikfluid zu diesem Fahr-Hydraulikmotor (M₁, M₂, M₃, M₄) freigeben und in der Hochdruck-Antriebszustand-Schaltstellung den zu diesem Fahr-Hydraulikmotor parallelen Bypass-Strömungsweg (B₁, B₂, B₃, B₄) zur Erzeugung des Strömungskurzschlusses zwischen den Fluidanschlüssen (30, 32) dieses Fahr-Hydraulikmotors (M₁, M₂ M₃, M₄) freigeben.

10. Elektrohydraulisches Antriebssystem nach einem der Ansprüche 2-9,
**dadurch gekennzeichnet, dass** wenigstens eine, vorzugsweise jede Schalt-Ventileinheit ein Proportionalventil umfasst.

11. Bodenbearbeitungsmaschine, vorzugsweise Bodenverdichter, umfassend eine Mehrzahl von Antriebsrollen (12, 14; 12, 16, 18, 20, 22) und ein elektrohydraulisches Antriebssystem (24) nach einem der Ansprüche 1-9,
vorzugsweise wobei wenigstens eine Antriebsrolle (12, 14) eine Bodenbearbeitungswalze umfasst oder/und wenigstens eine Antriebsrolle (16, 18, 20, 22) wenigstens ein Rad umfasst.

12. Verfahren zum Betreiben einer Bodenbearbeitungsmaschine nach Anspruch 11 in Verbindung mit Anspruch 3, wobei das Verfahren wenigstens eine der folgenden Maßnahmen umfasst:
- in dem Hochdruck-Antriebszustand sind bei einem ersten Teil der Fahr-Hydraulikmotoren (M₁, M₂ M₃, M₄) die jeweils zugeordneten Schalt-Ventileinheiten (S₁, S₂, S₃, S₄) in die Hochdruck-Antriebszustand-Schaltstellung geschaltet,
- bei Übergang von dem Hochdruck-Antriebszustand in einen Bremszustand des elektrohydraulischen Antriebssystems (24) wird wenigstens ein Teil der, vorzugsweise alle Schalt-Ventileinheiten (S₁, S₂, S₃, S₄) des ersten Teils von Fahr-Hydraulikmotoren (M₁, M₂ M₃, M₄) in die Grund-Antriebszustand-Schaltstellung geschaltet.

13. Verfahren nach Anspruch 12,
**dadurch gekennzeichnet,**
**dass** in dem Hochdruck-Antriebszustand bei einem zweiten Teil der Fahr-Hydraulikmotoren (M₁, M₂ M₃, M₄) die jeweils zugeordneten Schalt-Ventileinheiten (S₁, S₂, S₃, S₄) in die Grund-Antriebszustand-Schaltstellung geschaltet sind,
oder/und
**dass** der erste Teil der Fahr-Hydraulikmotoren (M₁, M₂ M₃, M₄) die Hälfte der Fahr-Hydraulikmotoren (M₁, M₂ M₃, M₄) der Bodenbearbeitungsmaschine (10) umfasst.

14. Verfahren nach Anspruch 12 oder 13,
**dadurch gekennzeichnet, dass** die Fahr-Hydraulikmotoren (M₁, M₂ M₃, M₄) des ersten Teils von Fahr-Hydraulikmotoren (M₁, M₂ M₃, M₄) wenigstens einer um eine erste Drehachse (D1) drehbaren ersten Antriebsrolle (12) der Bodenbearbeitungsmaschine (10) zugeordnet sind,
vorzugsweise wobei die Fahr-Hydraulikmotoren (M₁, M₂ M₃, M₄) eines zweiten Teils von Fahr-Hydraulikmotoren (M₁, M₂ M₃, M₄) wenigstens einer um eine zweite Drehachse (D₂) drehbaren zweiten Antriebsrolle (14; 16, 18, 20, 22) der Bodenbearbeitungsmaschine (10) zugeordnet sind.

15. Verfahren nach Anspruch 13,
**dadurch gekennzeichnet, dass** ein Teil der Fahr-Hydraulikmotoren (M₁, M₂ M₃, M₄) des ersten Teils von Fahr-Hydraulikmotoren (M₁, M₂ M₃, M₄) wenigstens einer um eine erste Drehachse (D₁) drehbaren ersten Antriebsrolle (12) der Bodenbearbeitungsmaschine (10) zugeordnet ist und ein Teil der Fahr-Hydraulikmotoren (M₁, M₂ M₃, M₄) des zweiten Teils von Fahr-Hydraulikmotoren (M₁, M₂ M₃, M₄) der wenigstens einen um die erste Drehachse (D₄) drehbaren ersten Antriebsrolle (12) der Bodenbearbeitungsmaschine (10) zugeordnet ist, oder/und dass ein Teil der Fahr-Hydraulikmotoren (M₁, M₂ M₃, M₄) des ersten Teils von Fahr-Hydraulikmotoren (M₁, M₂ M₃, M₄) wenigstens einer um eine zweite Drehachse (D₂) drehbaren zweiten Antriebsrolle (14; 16, 18, 20, 22) der Bodenbearbeitungsmaschine (10) zugeordnet ist und ein Teil der Fahr-Hydraulikmotoren (M₁, M₂ M₃, M₄) des zweiten Teils von Fahr-Hydraulikmotoren (M₁, M₂ M₃, M₄) der wenigstens einen um die zweite Drehachse (D2) drehbaren zweiten Antriebsrolle (14; 16, 18, 20, 22) der Bodenbearbeitungsmaschine (10) zugeordnet ist.
